# FASCICULE DE BREVET EUROPEEN

(11) **EP 0 935 924 B1**
(45) Date de publication et mention de la délivrance du brevet: **18.08.2004**
(21) Numéro de dépôt: 99400168.3
(22) Date de dépôt: 25.01.1999
(51) Int. Cl.: A23B 4/16, A23B 4/24, A23L 1/277, A23L 1/015, A23L 1/315

(54) **Procédé et installation de traitement à l'ozone de produits alimentaires**
Verfahren und Vorrichtung zur Behandlung von Lebensmitteln mit Ozon
Process and apparatus for the treatment of food products with ozone

(30) Priorité: 04.02.1998 FR 9801283
(43) Date de publication de la demande: 18.08.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Crisinel, Pascal, 78280 Guyancourt (FR); Le Royer, Sylvie, 49071 Beaucouze (FR)
(74) Mandataire: Mellul-Bendelac, Sylvie Lisette

(56) Documents cités:
- EP-A- 0 284 502
- DE-A- 2 332 058
- PATENT ABSTRACTS OF JAPAN vol. 012, no. 181 (C-499), 27 mai 1988 & JP 62 289164 A (KIBUN KK), 16 décembre 1987

## Description

La présente invention concerne un procédé et une installation de traitement de produits alimentaires à l'ozone, visant notamment à obtenir un blanchiment ou décoloration, une sanitation, et une désodorisation des produits ainsi traités.

La littérature concernant le traitement à l'ozone de produits alimentaires, en particulier dans le domaine des produits de la mer (poissons, crustacés...), est on le sait extrêmement abondante, on se reportera notamment aux documents FR-385 815, EP-294 502, FR-797 928, ou encore US-4 559 902.

L'utilisation d'ozone a ainsi été tout particulièrement décrite pour le traitement de chairs de poisson, avec l'objectif d'aboutir à une stérilisation et désodorisation de la chair, la chair de poisson traitée provenant de la récupération des résidus demeurant sur les arêtes et la tête après filetage du poisson, de chutes de découpes de filets, voire de filets proprement dits, la chair considérée étant au final utilisée comme matière première pour la fabrication de différents produits tels que surimis ou autres pâtés, terrines, ou steaks de poisson.

Une installation typique de récupération et traitement de telles chairs de poisson, pour élaborer ce que l'homme du métier appelle du " surimi base " comporte alors les étapes suivantes :
- une étape de séparation de la chair des arêtes et têtes (donnant lieu à une première pulpe brute prête à l'emploi si nécessaire);
- une ou plusieurs opérations de lavage à l'eau, éventuellement légèrement acidifiée, chaque opération de lavage étant suivie d'une étape d'essorage (fournissant une pulpe lavée prête à l'emploi pour certaines applications);
- une étape de raffinage permettant, par passage sur un tamis, de séparer les protéines des impuretés (restes de peau....);
- une dernière opération de séparation mécanique eau/chair réalisée par décantation centrifuge ou pressage à vis, fournissant la chair de poisson lavée et raffinée prête à l'emploi (surimi base).

Les résultats de blanchiment des chairs animales sont couramment suivies par les sites industriels par des mesures de couleur : " chromamétrie ", ou " colorimetry " en anglais, avec relevé de la luminance ou blancheur, de l'indice du rouge/bleu, et de l'indice du jaune/vert, par exemple selon le système classique L* / a* / b* (référence CIE 1976), le facteur L s'exprimant en %.

Pour des raisons de simplification, on fera référence dans tout ce qui suit au système ou encore à des résultats L/a/b ou L,a,b, indistinctement, en gardant clairement à l'esprit que de telle mentions se réfèrent au système d'évaluation ci-dessus évoqué.

Les objectifs recherchés en terme de chromamétrie, au fil des différents lavages pratiquées, sont en général (selon le produit considéré) une augmentation de la blancheur, un abattement du rouge, et une absence d'évolution voire une diminution des jaunes/bruns.

Le document EP-A-284 502 cité précédemment, décrit notamment un dispositif de traitement de chair animale constitué d'une enveloppe dans laquelle tourne un tube creux muni d'une cloison hélicoïdale, l'ensemble constituant une vis de transfert, le volume libre existant entre la parois interne de l'enveloppe extérieure et la cloison hélicoïdale externe du tube creux constituant une chambre de barbotage dans laquelle circule le mélange de chair et d'eau à traiter, le mélange gazeux comportant l'ozone étant injecté à l'intérieur du tube creux et diffusé vers l'extérieur dans la chambre de barbotage à travers une pluralité de diffuseurs situés tout au long de la vis de transfert.

L'exemple fourni par le document indique une vitesse de transfert de la chair à l'intérieur du système voisine de 1cm/s, fournissant, compte tenu des caractéristiques géométriques de l'appareil, un débit de chair voisin de 1 litre/mn.

Outre la complexité du système décrit dans ce document, les travaux menés à bien par les Demanderesses ont permis de démontrer que du fait de la dynamique créée dans un tel appareillage, les performances de contact entre la chair de poisson et l'ozone dissous sont insuffisantes (pas de mélange intime entre la chair et le gaz), entraînant une démixtion solide/gaz, mais aussi en conséquence une absence d'efficacité sur tout le diamètre de la vis.

On peut également ajouter que l'utilisation de poreux d'injection du gaz semble peu compatible avec les exigences de nettoyabilité couramment pratiquées dans l'industrie alimentaire (zones de la vis difficiles à atteindre par un agent de nettoyage, et bouchage potentiel des injecteurs poreux par de la matière alimentaire).

La présente invention vise notamment à remédier aux problèmes techniques précédemment évoqués. Elle s'attache en particulier à proposer un procédé et une installation de traitement de produits alimentaires à l'ozone permettant :
- d'améliorer la productivité des produits alimentaires traités à l'ozone;
- d'améliorer la qualité du transfert de l'ozone au produit alimentaire à traiter (on sait qu'en pratique à l'heure actuelle, seuls 15 à 60% - selon les installations disponibles - de l'ozone injecté est effectivement transféré au produit alimentaire considéré);
- éviter néanmoins les risques d'altération du produit (à titre illustratif on peut évoquer ici le risque d'altération d'une chair de poisson par brunissement du fait d'un surdosage local);
- réduire globalement le nombre d'étapes de lavage pratiquées par la chaîne de traitement utilisatrice ;
- obtenir un gain qualitatif du produit.

Pour ce faire, le procédé de traitement d'un produit alimentaire selon l'invention, du type qui comporte une mise en contact du produit avec de l'ozone, le produit ayant été au préalable mélangé pour former une solution initiale qui comporte outre le produit, de l'eau, se caractérise selon la revendication 1 ci-après.

Le " contacteur " selon l'invention est apte à réaliser un temps de contact suffisant entre le produit et l'ozone injecté dans la solution, pour permettre le traitement requis, sans qu'intervienne une démixtion liquide/gaz.

Comme il apparaîtra clairement à l'homme du métier, les " produits alimentaires " visés par la présente invention pourront être extrêmement variés, comprenant à titre illustratif les chairs animales telles que les pulpes de poisson mais également d'autres produits de la mer tels que mollusques ou crustacés, les viandes de boucherie (boeuf, porc, mouton etc.....), d'autres produits alimentaires tels que les chairs ou purées de fruits ou de légumes, ou encore des produits que l'on peut qualifier de produits " sanguins " ou autres dérivés " sanguinolents " de l'industrie alimentaire. On sait en particulier que de tels dérivés sanguins font couramment l'objet d'une récupération, d'un retraitement (notamment en vue de séparer le plasma des sous-produits rouges protéinés), à des fins de réutilisation, non seulement pour l'alimentation animale mais également humaine par exemple dans le domaine de la charcuterie.

On comprendra également que le " traitement " à l'ozone selon l'invention vise, selon le produit alimentaire considéré, mais également selon le cahier des charges recherché par chaque site utilisateur particulier, à réaliser l'une ou plusieurs des actions parmi les actions suivantes: un blanchiment ou décoloration, une désinfection, ou encore une désodorisation du produit.

Ainsi, à titre illustratif, pour exemplifier la notion de " temps de contact suffisant entre le produit et l'ozone " selon l'invention, on peut considérer l'exemple de chairs de poisson récupérées sur des arêtes et têtes de poissons résultant d'opérations de filetage, et traitées pour la fabrication ultérieure de produits du type " surimi ", la qualité de ces chairs de poisson étant évaluée après traitement selon la méthode de chromamétrie par le système L/a/b, un site utilisateur donné considérera par exemple un temps de contact suffisant pour obtenir une blancheur de la chair atteignant au moins 60% voire 70% sur l'échelle L.

La " solution initiale " selon l'invention doit s'entendre comme un mélange solide/liquide homogène ou non.

Comme on l'a vu précédemment, la " solution initiale " à traiter selon l'invention pourra comprendre un ou plusieurs produits alimentaires de type extrêmement varié.

On comprendra par ailleurs que selon l'application considérée, la solution initiale, qui comprend donc le produit alimentaire et de l'eau, peut comprendre en outre des additifs tels que des acides ou des bases dont le rôle peut être notamment d'ajuster le PH du milieu pour permettre la maîtrise de la rétention d'eau par les protéines animales afin de faciliter ensuite leur rinçage et leur essorage, ou encore des antioxygènes tels l'acide ascorbique, ou bien des stabilisants tels l'EDTA, voire des enzymes ou encore des polyphosphates ou autres sels de sodium ou de calcium.

Selon une des mises en oeuvre avantageuse de l'invention, la solution intiale à traiter comprend un composé de la famille des peroxydes, tels le peroxyde d'hydrogène.

Selon une autre des mises en oeuvre avantageuse de l'invention, la solution intiale à traiter comprend un composé de la famille des acides organiques, tels l'acide citrique, l'acide acétique, l'acide succinique, ou encore l'acide lactique.

Sans que la Demanderesse puisse à aucun moment être liée par l'explication donnée ci-après, on peut avancer le fait que la présence d'un acide organique dans la solution initiale facilite, en présence ensuite d'ozone, la formation de peroxyacides (par exemple l'acide peracétique, ou encore à titre d'exemple l'acide mono ou encore di-percitrique) très actifs.

Selon une autre des mises en oeuvre avantageuse de l'invention, la solution intiale à traiter comprend un composé de la famille des acides minéraux tels l'acide nitrique.

Selon l'invention, la " solution initiale " qui comporte le produit à traiter arrive " sous pression " dans le contacteur, ce que l'on doit entendre par une pression supérieure à la pression atmosphérique, se situant avantageusement entre 0,1 et 10 bars relatifs, mais plus préférentiellement inférieure ou égale à 2 bars relatifs.

Le rôle du contacteur est de réaliser un mélange que l'on peut qualifier d'intime entre le produit à traiter et l'ozone, il permet donc d'une part de réaliser ou d'achever la solubilisation de l'ozone dans l'eau, et d'autre part de réaliser un temps de contact suffisant entre le produit et l'ozone dissous sans que n'intervienne une démixtion, ce temps de contact devant être suffisant pour obtenir le niveau de traitement requis.

Selon un des modes de réalisation de l'invention, le contacteur pourra se présenter sous la forme d'un réacteur tubulaire tel que constitué d'une canalisation adoptant un chemin non rectiligne, muni d'une entrée, permettant d'admettre la solution en provenance de l'organe de pompage et d'une sortie, apte à être raccordée en aval, par exemple à un organe de stockage de la solution , ou encore un dispositif dans lequel la solution pourra subir une opération postérieure au traitement.

A titre de "chemin non rectiligne", la canalisation pourra avantageusement adopter, sur tout ou partie de la portion comprise entre l'entrée et la sortie du contacteur, une structure de une ou plusieurs spires de forme circulaire ou hélicoïdale.

Toujours à titre illustratif, le contacteur liquide/gaz selon l'invention pourra également être constitué par un mélangeur statique tels que ceux commercialisés par la société SULZER.

Selon une des mises en oeuvre de l'invention, le produit entrant dans la composition de la solution initiale est une chair de poisson telle qu'obtenue après une opération de séparation chair/arêtes et/ou chair/têtes.

Selon une autre des mises en oeuvre de l'invention, le produit entrant dans la composition de la solution initiale a, préalablement audit mélange, subit une ou plusieurs opérations de lavage en milieu aqueux, le cas échéant légèrement acidifié (une étape d'essorage étant intercalée entre deux lavages).

Selon une des mises en oeuvre de l'invention, on procède ultérieurement au traitement, à une étape d'essorage de la solution résultant du traitement,
puis à une ou plusieurs opérations de lavage du produit en milieu aqueux, le cas échéant légèrement acidifié.

Le procédé selon l'invention peut adopter par ailleurs l'une ou plusieurs des caractéristiques techniques telles que revendiquées dans les revendications 2 à 26 ci-après, et notamment :
- la dose d'ozone utilisée pour le traitement, exprimée en grammes d'ozone par kilo de produit traité, se situe dans la gamme allant de 0,2 à 2 g/kg (tenant compte non seulement de la spécificité du produit traité et du traitement recherché, mais également par exemple de la législation nationale dont dépend chaque site utilisateur).

La dose d'ozone se situera préférentiellement dans la gamme allant de 0,3 à 1 g/kilo de produit, et encore plus préférentiellement dans la gamme allant de 0,4 à 0,9 g/kilo de produit traité.
- La teneur en ozone dans le mélange gazeux de traitement est située dans la gamme allant de 10 à 200 g/m³, et se situe préférentiellement dans la gamme allant de 20 à 120 g/m³, et plus préférentiellement dans la gamme allant de 40 à 100 g/m³ de mélange.
- La composition de la solution initiale traitée respecte un taux de dilution correspondant à 1 volume de produit pour 0,5 à 10 volumes d'eau, mais préférentiellement un taux de dilution correspondant à 1 volume de produit pour 1 à 5 volumes d'eau, et plus préférentiellement encore un taux de dilution correspondant à 1 volume de produit pour 3 à 5 volumes d'eau.

L'invention concerne également une installation de traitement d'un produit alimentaire, permettant la mise en contact du produit avec de l'ozone, le produit ayant été au préalable mélangé pour former une solution initiale qui comporte outre le produit, de l'eau, telle que revendiquée en revendication 27 ci-après.

L'installation selon l'invention pourra par ailleurs adopter l'une ou plusieurs des caractéristiques techniques telles que revendiquées en revendications 28 à 34 ci-après.

D'autres caractéristiques et avantages de la présente invention apparaîtront plus clairement dans la description suivante, donnée à titre illustratif mais nullement limitatif, faite en relation avec les dessins annexés, pour lesquels :
- la figure 1 est une installation de traitement à l'ozone de petites quantités de produits alimentaires selon l'état de la technique;
- la figure 2 est une représentation schématique d'une autre installation de traitement de produits alimentaires à l'ozone selon l'état de la technique, mettant en oeuvre une injection dans le bas d'un malaxeur;
- la figure 3 est une représentation schématique d'une installation de traitement de produits alimentaires à l'ozone selon l'invention, mettant en oeuvre un contacteur à une seule série de spires circulaires;
- la figure 4 est une représentation schématique d'une autre installation de traitement de produits alimentaires à l'ozone selon l'invention mettant en oeuvre trois séries de spires circulaires;
- la figure 5 fournit des résultats de mesures de paramètres chromatiques L /a / b, après traitement à l'ozone selon l'invention effectué sur de la chair de lieu noir frais ayant subi, après l'étape de séparation chair/arêtes, une opération de lavage en milieu aqueux;
- la figure 6 fournit d'autres résultats de mesures de paramètres chromatiques L /a /b, après traitement à l'ozone selon l'invention effectué sur de la chair de lieu noir, ayant subi, après l'étape de séparation chair/arêtes, deux opérations successives de lavage en milieu aqueux, entourant une étape d'essorage intercalée (ces essais ont notamment fait varier en combinaison la dose d'ozone, le paramètre de présence/absence d'acide citrique dans la solution, ou encore le taux de dilution de la solution initiale);
- la figure 7 fournit d'autres résultats de mesure de paramètres chromatiques d'échantillons de lieu noir traité selon l'invention en fonction du taux de dilution de la solution initiale;
- la figure 8 fournit des résultats de mesure de paramètres chromatiques sur des échantillons de saumon traité à l'ozone selon l'invention.

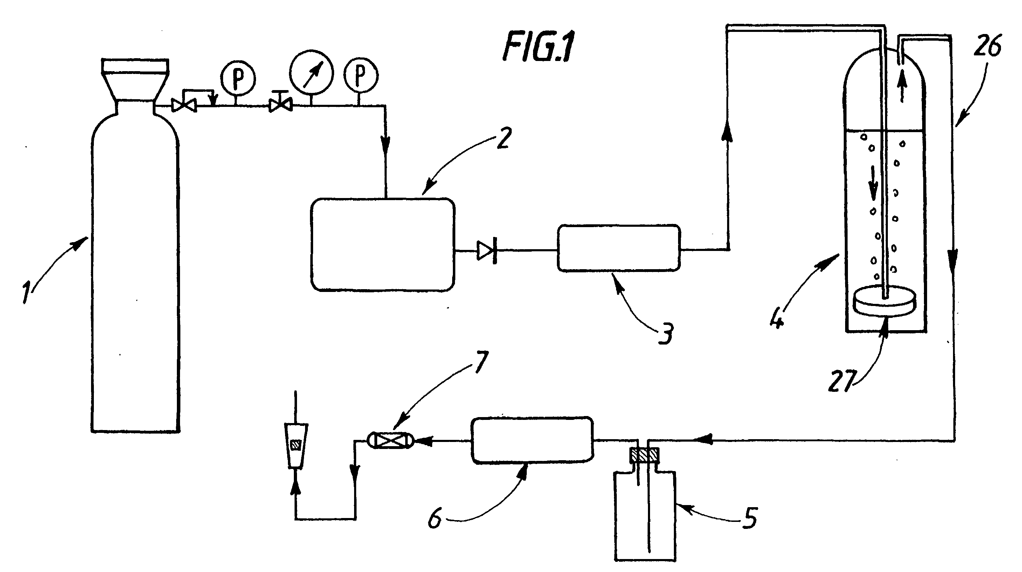

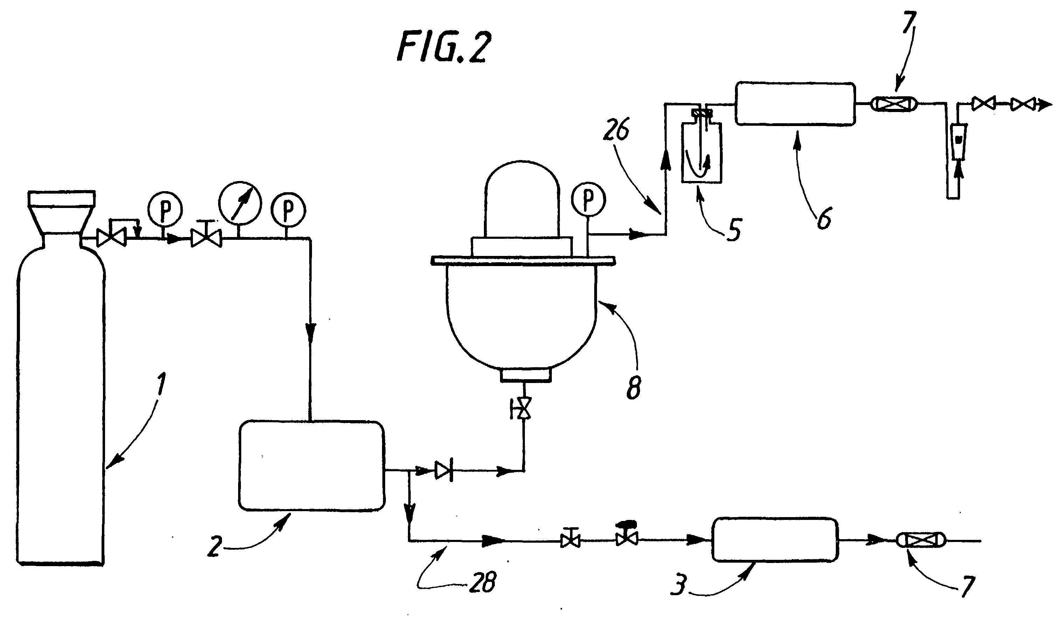

Les figures 1 et 2 illustrent deux représentations schématiques d'installations appartenant à l'état de la technique, donnant de pauvres résultats que l'on peut considérer comme insuffisants en termes de taux de transfert de l'ozone injecté dans le procédé au produit alimentaire à traiter.

A titre illustratif, l'installation de la figure 1 convient pour traiter à l'ozone de très faibles quantités de chair de poisson.

On reconnaît sur la figure une source 1 d'un mélange gazeux comportant de l'oxygène, par exemple de l'air ou encore de l'oxygène pur, dirigé vers un ozoneur 2, le mélange gazeux de traitement comportant l'ozone (et également de l'oxygène), obtenu en sortie de l'ozoneur 2, étant analysé (3) avant d'être envoyé vers le réacteur 4 qui comporte la chair de poisson à traiter en solution aqueuse.

Le mélange gazeux de traitement comportant l'ozone, arrivant en provenance de l'analyseur 3, est injecté dans la solution aqueuse comportant la chair de poisson au travers d'un injecteur simple, qu'il s'agisse d'un simple tube percé d'orifices ou encore comme c'est le cas sur la figure 1 d'un disque poreux 27 présent dans la partie basse du réacteur 4.

Pour le mode de réalisation représenté dans le cadre de cette figure 1, la solution initiale comportant la chair de poisson n'est pas agitée dans le réacteur 4.

Afin de déterminer et suivre le taux de transfert d'ozone à la solution, l'installation comporte une ligne de récupération 26 du ciel gazeux présent dans le réacteur au-dessus de la solution, permettant d'analyser ce ciel gazeux dans un analyseur d'ozone 6 (après que le gaz récupéré ait transité dans un flacon purgeur 5), le gaz résultant de l'analyse étant ensuite éliminé vers l'atmosphère extérieure après passage sur un pot catalytique de détoxification 7.

En terme de taux de transfert de l'ozone injecté à la solution (taux qui on le sait dépend de nombreux paramètres parmi lesquels la teneur du gaz injecté en ozone, l'acidité de la solution à traiter, son taux de dilution ou encore la charge de produit à traiter), une telle installation permet difficilement d'atteindre des taux de transfert dépassant 15 à 20% de l'ozone initialement présent dans le mélange gazeux de départ.

La figure 2 illustre pour sa part une installation permettant de traiter de plus grandes quantités de chair de poisson, l'installation intégrant un malaxeur 8 du type de ceux couramment utilisés dans l'industrie alimentaire.

La solution à traiter, qui comporte la chair de poisson et de l'eau, est donc ici régulièrement agitée au sein du malaxeur 8.

On retrouve sur cette figure, comme précédemment, la source de mélange gazeux qui comporte de l'oxygène 1, alimentant l'ozoneur 2, le mélange gazeux de traitement qui comporte de l'ozone (et de l'oxygène) issu de l'ozoneur 2, étant dirigé vers le bas du malaxeur 8.

Pour des raisons de débit, le mélange gazeux de traitement comportant l'ozone est ici analysé grâce à une ligne de dérivation 28 se piquant en sortie de l'ozoneur 2.

Ici encore, le ciel gazeux existant dans la partie haute du malaxeur 8 est analysée grâce à la ligne 26, comportant le flacon purgeur 5, l'analyseur 6, et le pot catalytique de détoxification 7.

Les résultats obtenus grâce à une telle installation montrent un transfert d'ozone encore insuffisant, atteignant selon les cas 20 à 60% de l'ozone initialement présent dans le mélange gazeux de départ.

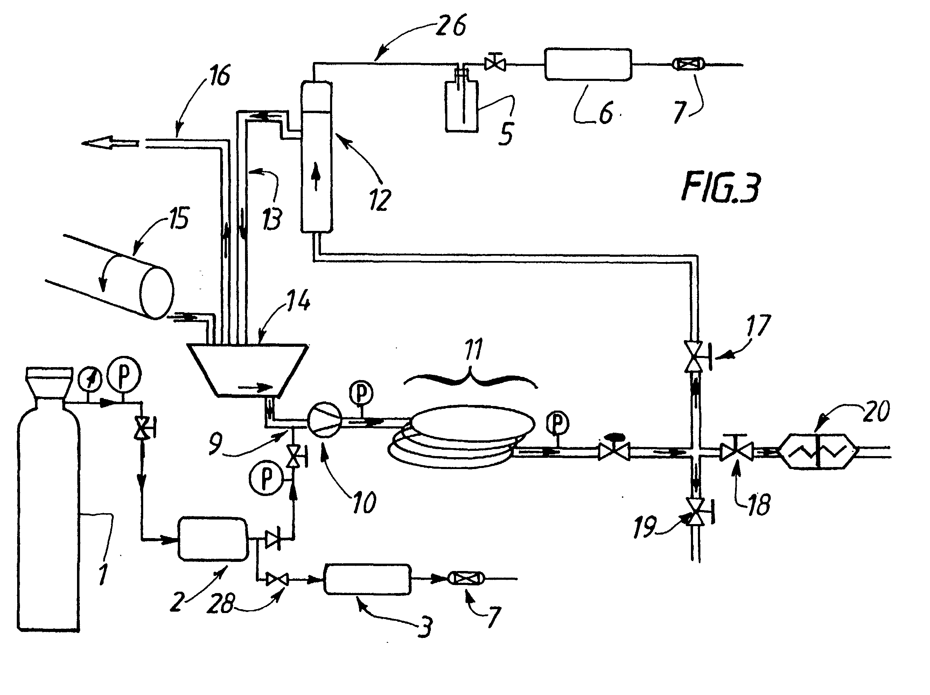

La figure 3 illustre alors une installation de traitement à l'ozone d'un produit alimentaire selon l'invention, intégrant la combinaison d'un organe de pompage 10 et d'un contacteur 11 constitué d'un ensemble de spires circulaires.

On retrouve sur cette figure la source 1 de mélange gazeux comportant de l'oxygène (par exemple de l'air ou encore de l'oxygène pur), qui alimente un ozoneur 2, produisant en sa sortie le mélange gazeux de traitement qui comporte de l'ozone (et donc également de l'oxygène, voire de l'oxygène et de l'azote), ainsi que la ligne de piquage 28 permettant d'analyser le mélange gazeux de traitement en sortie d'ozoneur 2.

La solution initiale qui comporte outre le produit, de l'eau, est pour le mode de réalisation représentée stockée dans un bac tampon 14, le produit à traiter provenant sur la figure d'un dispositif 15, qui selon l'application considérée peut représenter un point très variable sur la chaîne de fabrication du site utilisateur. A titre illustratif on peut citer, en considérant le cas du traitement de chairs de poisson, les exemples suivants:
- le dispositif 15 peut représenter une séparatrice (souvent appelée "pulpeuse") qui sépare la chair de poisson des arêtes ou des têtes après une opération de filetage;
- le dispositif 15 peut également représenter une étape d'essorage, intervenant après un premier lavage en solution aqueuse de la chair précédemment séparée des arêtes et de la tête;
- le dispositif 15 peut également représenter une étape d'essorage intervenant après une n.ème opération de lavage en solution aqueuse de la chair initialement séparée ;
- toujours à titre illustratif, le dispositif 15 peut représenter une raffineuse qui sépare la chair des impuretés (morceaux de peau...) demeurant après la n^{ieme} opération de lavage.

La solution initiale à traiter présente dans le bac tampon 14 est dirigée vers l'organe de pompage 10, puis vers le contacteur 11, le mélange gazeux de traitement comportant l'ozone étant ici injecté sur la ligne allant du bac tampon 14 à l'organe de pompage 10.

La solution initiale résultant du traitement dans le contacteur 11 est selon les cas, par un système avantageux de vannes 17, 18, et 19, dirigée vers un décanteur centrifuge 20, permettant de séparer l'eau de la chair ainsi traitée, ou encore, vers une colonne de dégazage 12, dont la solution est extraite pour réalimenter, via la ligne 13, le bac tampon 14.

On notera que la vanne 19 permet d'effectuer un prélèvement de la solution traitée issue du contacteur 11 à des fins d'analyse, par exemple par chromamétrie.

Ici encore, le ciel gazeux de la colonne 12 est analysé via la ligne 26.

Le produit peut ainsi subir selon les cas une ou plusieurs opérations de traitement dans la boucle qui comporte le bac 14, le contacteur 11, et la ligne de recyclage qui comporte la colonne de dégazage 12.

La ligne 16 représente pour sa part une ligne d'extraction de la phase gazeuse présente dans le bac 14, fort utile, dans le cas de la recirculation de tout ou partie de la solution initiale après traitement à l'ozone dans le contacteur 11.

Comme signalé précédemment, le mélange gazeux de traitement comportant l'ozone, tel qu'issu de l'ozoneur, est ici injecté au niveau du point 9 de la ligne reliant le bac tampon 14 à l'organe de pompage 10, mais comme largement développé précédemment, l'injection du mélange gazeux de traitement pourrait également avoir lieu au niveau de l'une ou plusieurs des localisations situées entre le bac 14 et l'organe de pompage 10, entre l'organe de pompage 10 et le contacteur 11, voir même dans plusieurs points du contacteur 11.

Il est à noter que si l'ensemble de spires du contacteur 11 a été représenté sur cette figure en situation horizontale, le plan des spires pourrait également se situer dans une autre position, par exemple dans le plan vertical.

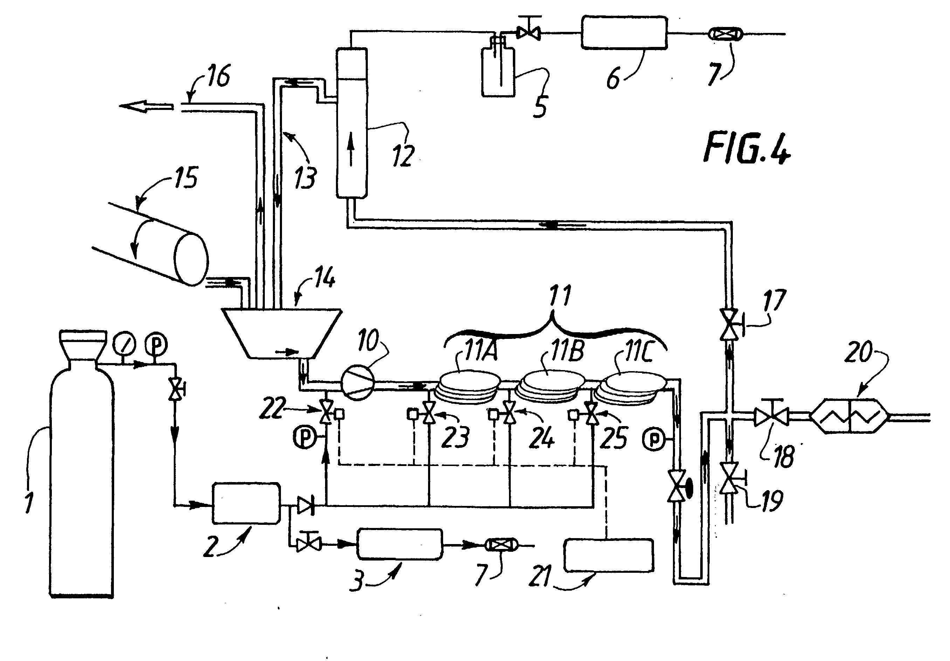

La figure 4 illustre une autre installation de traitement à l'ozone de produits alimentaires selon l'invention, très proche de l'installation précédemment décrite dans le cadre de la figure 3, l'installation différant ici par la structure du contacteur 11, qui présente dans le mode de réalisation représenté une structure de trois séries de spires circulaires.

L'installation permet par ailleurs, via le système de vannes 22, 23, 24, et 25, d'injecter le mélange gazeux de traitement en provenance de l'ozoneur 2 au niveau de l'une ou plusieurs des localisations suivantes : entre le bac tampon 14 et l'organe de pompage 10 (22), entre l'organe de pompage 10 et la première série de spires du contacteur 11 (23), entre les deux premières séries de spires (24), ou encore entre les deux dernières séries de spires du contacteur 11 (25).

Un organe de régulation de débit de gaz 21 permet alors d'ouvrir sélectivement l'une ou plusieurs des vannes 22 à 25, et de contrôler et réguler le débit de mélange parvenant à chaque point d'injection.

Une installation telle que celle des figures 3 et 4 a donné lieu à des taux de transfert d'ozone d'au moins 80%, voire de plus de 90%.

Une installation telle que celle décrite dans le cadre de la figure 4 a été utilisée pour la réalisation d'exemples de mise en oeuvre en vue du traitement à l'ozone de différentes catégories de chairs de poisson ou de volaille.

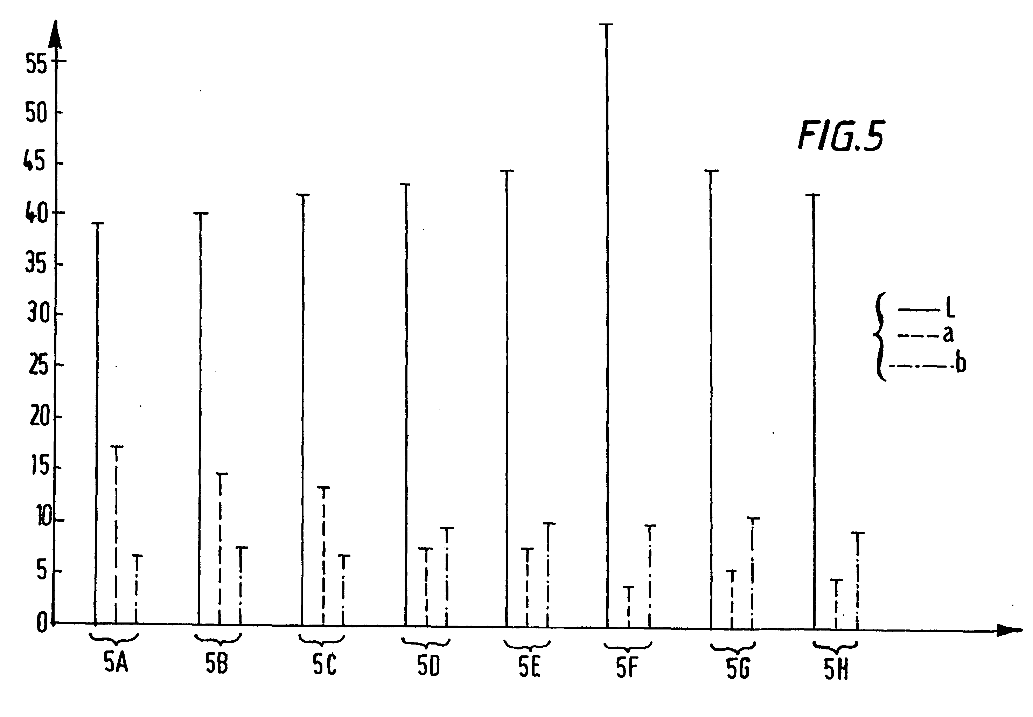

Les résultats obtenus après traitement sont représentés dans la cadre des figures 5 à 8 en termes d'évolution des paramètres chromatiques L, a, b.

Les mesures de chromamétrie ont été obtenues grâce à un système Minolta CR210.

Pour chaque figure N°X, on a représenté le résultat d'essais respectivement nommés XA, XB, XC, ..., le résultat de chaque essai étant donné en termes de chromamétrie L, a, b de la façon suivante : la mesure de L (représentative de la blancheur) est représentée en trait continu, la mesure de a (représentative du rouge) est représentée en trait tireté, tandis que la mesure de b (représentative du jaune/brun) est représentée en trait mixte tirets-pointillés.

A titre de caractéristiques communes à tous les essais relatés ci-dessous de traitement à l'ozone selon l'invention on note les éléments suivants :
- les atmosphères de traitement comportant l'ozone ont été obtenues à la sortie d'un ozoneur de marque OZONIA (type CF1);
- les solutions initiales traitées étaient amenées au contacteur à une pression voisine de 1 bar relatif;
- la granulométrie des produits traités (qu'il s'agisse de chairs de poisson ou de chair de volaille) était comprise entre 1 et 2 mm.

On notera par ailleurs qu'à conditions égales, des résultats légèrement différents peuvent être rapportés dans les figures annexées, ce qui n'étonnera pas l'homme du métier qui est familier du fait que les résultats de chromamétrie obtenus après de telles opérations de traitement et lavage sont très sensibles à l'état initial (notamment en terme de fraîcheur) du lot de poissons considéré.

Examinons maintenant dans ce qui suit le contenu de chacune des figures 5 à 8.

La figure 5 relate l'évolution des paramètres chromatiques L/a/b pour de la chair de lieu noir frais, les 8 essais 5A à 5H ayant été obtenus respectivement dans les conditions suivantes :
- les mesures de l'essai 5A ont été obtenues sur de la chair de lieu noir telle qu'obtenue directement en sortie de l'opération de séparation chair/arêtes (cette chair de lieu n'a donc subi aucune opération de lavage à l'eau et aucune opération de traitement à l'ozone selon l'invention);
- les résultats de l'essai 5B ont été obtenus sur une chair de lieu noir ayant subi, après l'opération de séparation chair/arêtes, une étape de lavage à l'eau faiblement acidifiée à l'acide citrique (teneur en acide citrique de la solution de lavage voisine de 0,2 % de la masse de chair diluée - cette chair de poisson a donc subi cette étape de lavage à l'eau mais n'a pas été traitée à l'ozone par le procédé selon l'invention);
- les résultats de l'essai 5C ont été obtenus sur une chair de lieu noir ayant subi, après l'opération de séparation chair/arêtes, deux étapes de lavage à l'eau faiblement acidifiée à l'acide citrique, une étape d'essorage étant intercalée entre les deux lavages (teneur en acide citrique de la solution de lavage voisine de 0,2 % de la masse de chair diluée - cette chair de poisson a donc subi ces étapes de lavage à l'eau mais n'a pas été traitée à l'ozone par le procédé selon l'invention);
- les résultats des essais 5D à 5H ont été obtenus après traitement à l'ozone selon l'invention de la chair de poisson issue de l'étape de lavage précédemment évoquée dans le cadre de l'essai 5B, la dose d'ozone utilisée pour le traitement étant respectivement pour chacun des 5 essais de 0,2 g/kg de chair de poisson; 0,5 g/kg; 0,9 g/kg; 1,8 g/kg; et pour le dernier essai 2 g/kg de chair.

Dans tous ces cas, la solution initiale qui comporte la chair de poisson est de l'eau légèrement acidifiée à l'acide citrique (teneur en acide citrique voisine de 0,2% de la masse de chair traitée diluée) et respecte un taux de dilution de 1 volume de produit pour 3 volumes d'eau.

Le mélange gazeux de traitement comportant l'ozone était dans tous ces cas injecté au niveau d'un point unique localisé entre le bac tampon 14 et l'organe de pompage 10.

Les résultats rapportés figure 5 illustrent, pour ce lot de lieu noir, l'effet spectaculaire obtenu grâce au traitement à l'ozone selon l'invention (l'optimum étant sans doute obtenu ici pour une dose d'ozone voisine de 0,9 g/kg de chair), donnant lieu à un net accroissement de la blancheur (L) mais surtout à un très net abattement du rouge (a), tout en maintenant presque inchangé le facteur (b).

On notera d'ailleurs que la chair de lieu noir a la réputation, pour l'homme de ce métier, d'être très difficile à blanchir en particulier selon l'état initial de fraîcheur du produit.

On peut tirer deux conclusions de cette première série de résultats :
- d'une part, qu'il est possible pour ce site utilisateur d'économiser les étapes de lavage supplémentaires intervenant normalement après le premier lavage de la chair en milieu aqueux qui suit l'étape de séparation des arêtes. On voit en effet que les résultats obtenus grâce à l'invention sont bien meilleurs que ceux obtenus à l'issu d'un premier lavage (5B) et même d'un second lavage(5C) traditionnel;
- on note d'autre part, que l'on obtient un produit final qualitativement différent (spectaculairement amélioré) de celui obtenu en sortie de chaîne traditionnelle: on obtient en effet pour le facteur " a " un optimum voisin de 4, valeur jamais obtenue par ce site utilisateur par les voies traditionnelles de lavage/essorage qui ne permettait pas d'abaisser ce facteur " a " en deçà de 8 ou 9, quel que soit le nombre de lavages pratiqués.

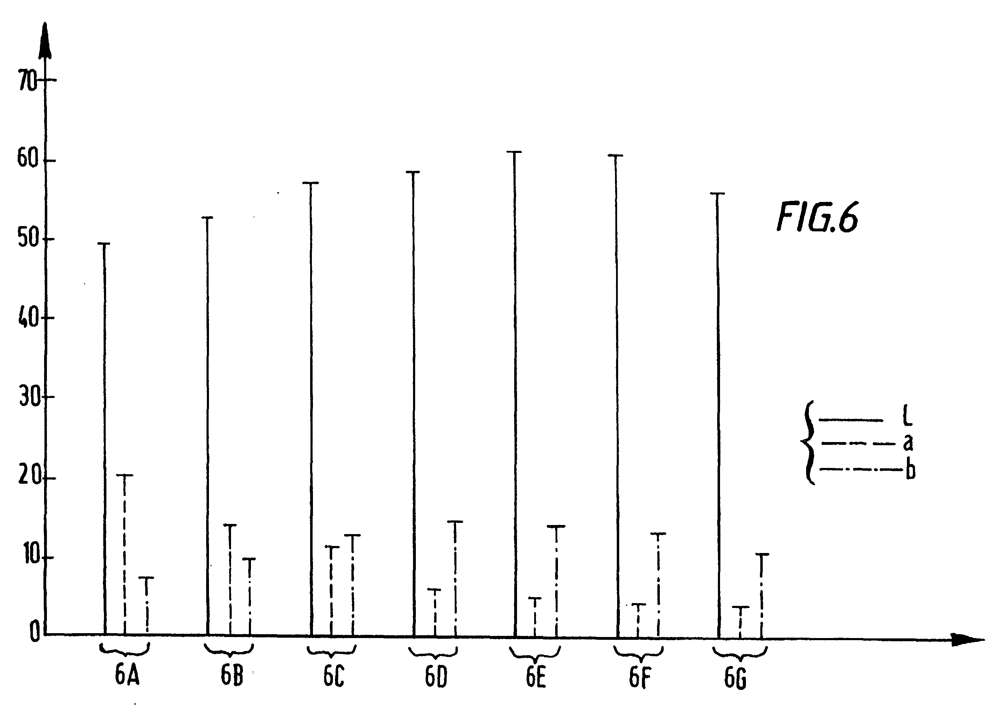

Ces résultats sont confirmés par ceux rapportés en figure 6, qui illustre à nouveau des résultats comparatifs obtenus sur de la chair de lieu noir frais, ayant subi, après l'étape de séparation chair/arêtes, non pas une mais deux opérations successives de lavage en milieu aqueux (une étape d'essorage étant intercalée). On a par ailleurs ici étudié les paramètres suivants : selon que la solution initiale à traiter comporte ou non de l'acide citrique, pour différents taux de dilution de la chair dans l'eau de la solution initiale, ainsi que pour des doses croissantes d'ozone dans l'atmosphère de traitement.

Les différents essais 6A à 6G relatés au niveau de cette figure 6 ont alors été obtenus dans les conditions suivantes :
- ici encore, les résultats de l'essai 6A ont été obtenus sur la chair de lieu noir résultant directement de l'étape de séparation chair/arêtes (la chair testée ici n'a donc subi ni opération de lavage à l'eau ni traitement à l'ozone selon l'invention);
- ici encore, le résultat de l'essai 6B a été obtenu sur une chair de lieu noir ayant subi, après l'opération de séparation chair/arêtes, une étape de lavage à l'eau légèrement acidifiée à l'acide citrique (teneur en acide citrique voisine de 0,2% de la masse de chair traitée diluée - la chair testée ici par chromamétrie a donc subi une étape de lavage à l'eau mais aucune opération de traitement à l'ozone selon l'invention);
- les résultats de l'essai 6C ont été obtenus sur une chair de lieu noir ayant subi non seulement une première opération de lavage à l'eau légèrement acidifiée mais ultérieurement après essorage une seconde opération de lavage à l'eau légèrement acidifiée à l'acide citrique (la chair testée ici a donc subi deux étapes successives - entourant une opération d'essorage - de lavage à l'eau, mais aucune opération de traitement à l'ozone selon l'invention);
- les résultats de l'essai 6D ont été obtenus en traitant à l'ozone selon l'invention, de la chair de lieu noir telle que résultant de la seconde opération de lavage à l'eau précédemment évoquée dans l'essai 6C, la solution initiale comportant cette chair de poisson étant ici dépourvue d'acide citrique, et se caractérisant par un taux de dilution correspondant à un volume de chair pour trois volumes d'eau.

La dose d'ozone appliquée pour cet essai 6D est égale à 0,8 g/kg de chair traitée (pour une teneur en ozone du mélange gazeux de traitement voisine de 80 g/m³ de gaz), le mélange gazeux de traitement comportant l'ozone étant injecté au niveau d'un point unique localisé entre le bac tampon 14 et l'organe de pompage 10.
- Les résultats des essais 6E et 6F ont également été obtenus en traitant la chair de poisson résultant des deux premières étapes de lavage à l'eau précédemment évoquées, ici aussi pour un taux de dilution de la chair dans l'eau de la solution initiale égal à 1 volume de chair pour 3 volumes de solution, la solution initiale comportant en revanche ici une faible dose d'acide citrique.

Les essais 6E et 6F ont ici respectivement mis en oeuvre une dose d'ozone de 0,87 g/kg de chair, et 1,2 g/kg de chair traitée (pour une teneur en ozone du mélange gazeux de traitement voisine de 80 g/m³ de gaz), le mélange gazeux de traitement comportant l'ozone étant ici encore injecté au niveau d'un point unique localisé entre le bac tampon 14 et l'organe de pompage 10.
- Les résultats de l'essai 6G ont été obtenus en traitant selon l'invention la chair de lieu noir issue des deux premières étapes de lavage à l'eau précédemment évoquées, la solution initiale qui comporte ici aussi une faible dose d'acide citrique, respecte en revanche un taux de dilution de 1 volume de chair pour 2 volumes d'eau.

La dose d'ozone appliquée dans le cas de cet essai 6G est de 0,92 g/kilo de chair traitée (pour une teneur en ozone du mélange gazeux de traitement voisine de 80 g/m³ de gaz), toujours injectée au niveau d'un point unique localisé entre le bac tampon 14 et l'organe de pompage 10.

Ces résultats qui sont rapportés dans le cadre de la figure 6 confirment donc l'effet spectaculaire obtenu tant en termes de blancheur que d'abattement du rouge (avec un optimum qui se situe pour ce lot ayant subi au préalable deux étapes de lavage à l'eau, au voisinage de 0,9 à 1,2 g/kg de chair).

On note que si le second lavage (6C) améliore à lui seul la blancheur, il laisse quasiment inchangé le facteur a, et dans tous les cas, les résultats globaux obtenus grâce à ce second lavage restent inférieurs à ceux obtenus selon l'invention dans le cadre des essais 6D, 6E, 6F.

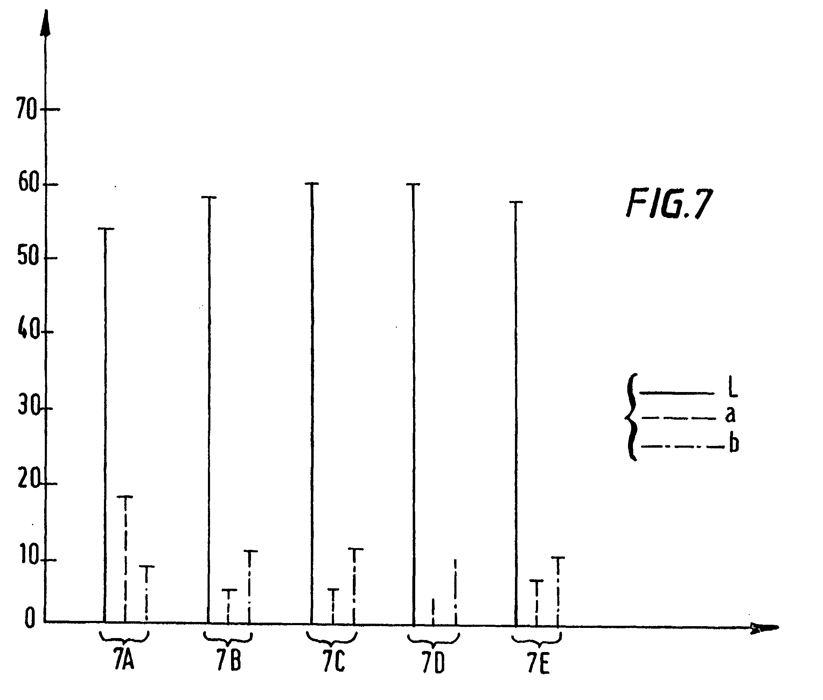

La figure 7 illustre l'évolution chromatique d'échantillons de chair de lieu noir pour des taux de dilution variables de la solution initiale.

Les essais 7A à 7E rapportés dans cette figure 7 ont alors été obtenus dans les conditions suivantes:
- ici encore les résultats de l'essai 7A ont été obtenus sur une chair de lieu noir ayant subi, après l'opération de séparation chair/arêtes, une simple étape de lavage à l'eau légèrement acidifiée à l'acide citrique (l'échantillon testé en termes chromatiques dans le cadre de cet essai 7A a donc subi uniquement une opération de lavage à l'eau, mais aucune opération de traitement à l'ozone selon l'invention);
- Les résultats des essais 7B à 7E ont été obtenus après traitement à l'ozone selon l'invention d'échantillons de chairs de lieu noir tels qu'obtenus après deux opérations de lavage à l'eau légèrement acidifiée à l'acide citrique (les échantillons de chairs de poisson traités ici selon l'invention résultent donc, après séparation des arêtes et de la tête, de deux opérations successives de lavage à l'eau acidifiée à l'acide citrique).

Tous les essais 7B à 7E ont été obtenus dans des conditions de doses d'ozone correspondant à 0,4 grammes d'ozone par kilo de chair traitée (pour une teneur en ozone du mélange gazeux de traitement voisine de 40 g/m³ de gaz), l'atmosphère de traitement étant toujours injectée au niveau d'un point unique localisé entre le bac tampon 14 et l'organe de pompage 10.

La solution initiale pour ces quatre essais était légèrement acidifiée à l'acide citrique (teneur en acide citrique voisine de 0,2% de la masse de chair traitée diluée).

Le taux de dilution chair/eau de la solution initiale était respectivement dans chacun des quatre cas de 1 volume de chair pour 1 volume d'eau, 1 pour 2, 1 pour 3, et 1 pour 5.

Ces résultats montrent donc, pour le lot de lieu noir traité, des résultats déjà excellents dès 0,4 g d'ozone par kg de chair traitée, avec un optimum du taux de dilution de la solution initiale se situant comme précédemment au voisinage de 1 pour 3 à 1 pour 2.

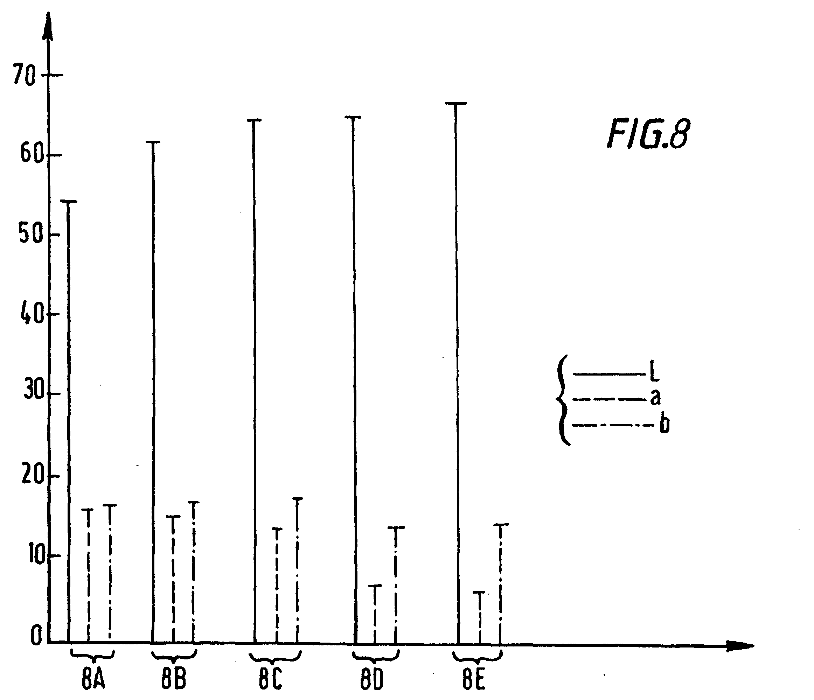

La figure 8 illustre pour sa part l'évolution des paramètres chromatiques sur des échantillons de saumon, les cinq essais représentés figure 8 ayant été obtenus respectivement dans les conditions suivantes:
- Les résultats de l'essai 8A ont été obtenus sur une chair de saumon telle qu'obtenue directement après l'opération de séparation chair/arêtes (les échantillons mesurés ici n'ont donc subi ni opération de lavage à l'eau ni opération de traitement à l'ozone selon l'invention);
- Les résultats de l'essai 8B ont été obtenus sur une chair de saumon ayant subi, après l'opération de séparation chair/arêtes, une opération de lavage à l'eau (les échantillons mesurés ici ont donc subi une simple opération de lavage à l'eau non acidifiée, et aucune opération de traitement à l'ozone selon l'invention);
- Les résultats de l'essai 8C ont été obtenus sur une chair de saumon ayant subi, après l'opération de séparation chair/arêtes, une opération de lavage à l'eau cette fois légèrement acidifiée à l'acide citrique (les échantillons mesurés ici ont donc subi une simple opération de lavage à l'eau acidifiée, et aucune opération de traitement à l'ozone selon l'invention);
- Les résultats des essais 8D et 8E ont été obtenus après traitement à l'ozone selon l'invention d'échantillons de saumon tels qu'issus de l'opération de lavage à l'eau précédemment évoquée pour l'essai 8B;

Dans les deux cas, la dose d'ozone appliquée était de 0,6 gramme d'ozone par kilo de chair de saumon traitée, et le taux de dilution de la solution initiale était de 1 pour 2.

En revanche, la solution initiale traitée était dans le cas de l'essai 8D dépourvue d'acide citrique, tandis que la solution initiale traitée dans le cas de l'essai 8E était légèrement acidifiée à l'acide citrique.

On constate tout d'abord à la lecture de ces résultats que l'étape de lavage à l'eau seule (8B) de la pulpe de saumon améliore déjà la blancheur L mais laisse à peu près inchangée la mesure du rouge a, tandis que le lavage à l'eau acidifiée de l'essai 8C améliore encore quelque peu ces résultats.

Le traitement à l'ozone selon l'invention (8D) permet quant à lui non seulement d'améliorer l'aspect blancheur mais surtout un abattement spectaculaire de rouge, tout en améliorant même ici le facteur b.

On note enfin que l'ajout d'acide citrique dans la solution initiale traitée pour l'essai 8E améliore les résultats obtenus par rapport à l'essais 8D (i.e par rapport à une solution initiale non acidifiée), essentiellement sur le facteur L.

En dehors des essais rapportés dans le cadre des figures 5 à 8, des essais complémentaires ont été pratiqués pour caractériser l'intérêt dans certains cas d'utiliser non pas une unique injection du mélange gazeux de traitement en amont de l'organe de pompage, mais une multi-injections.

A titre illustratif, on a testé en chromamétrie trois types d'échantillons de merlan :
- un premier type d'échantillons de chair de merlan ayant subi, après l'opération de séparation chair/arêtes, trois étapes de lavage à l'eau légèrement acidifiée à l'acide citrique - séparées par une étape d'essorage - (la chair testée ici par chromamétrie a donc subi des opérations de lavage à l'eau légèrement acidifiée mais aucune opération de traitement à l'ozone selon l'invention);
- un second type d'échantillon de chair de merlan ayant subi, après l'opération de séparation chair/arêtes puis les trois étapes de lavage à l'eau légèrement acidifiée à l'acide citrique précédemment évoquée - séparées par une étape d'essorage -, un traitement à l'ozone selon l'invention (la dose d'ozone utilisée pour le traitement est voisine de 0,6 g/kg de chair de poisson, la solution initiale qui comporte la chair de poisson et de l'eau légèrement acidifiée à l'acide citrique respecte un taux de dilution de 1 pour 5, le mélange gazeux de traitement comportant l'ozone étant ici injecté au niveau d'un point unique localisé entre le bac tampon 14 et l'organe de pompage 10);
- un troisième type d'échantillon de chair de merlan ayant subi, après l'opération de séparation chair/arêtes puis les trois étapes de lavage à l'eau légèrement acidifiée à l'acide citrique précédemment évoquée - séparées par une étape d'essorage -, un traitement à l'ozone selon l'invention (la dose d'ozone utilisée pour le traitement est ici encore voisine de 0,6 g/kg de chair de poisson, la solution initiale qui comporte la chair de poisson et de l'eau légèrement acidifiée à l'acide citrique respecte ici aussi un taux de dilution de 1 pour 5, mais en revanche le mélange gazeux de traitement comportant l'ozone est ici injecté simultanément au niveau de deux points (une moitié du débit entre le bac tampon 14 et l'organe de pompage 10 via la vanne 22 et l'autre moitié du débit entre les deux premières séries de spires du contacteur via le vanne 24).

Les résultats obtenus pour ces trois types d'échantillons de merlan confirment l'efficacité du traitement à l'ozone selon l'invention dès la mono-injection (blancheur supérieure à 60%, facteur " a " voisin de 3 et facteur " b " voisin de 12) mais montrent que par la mise en place d'une bi-injection du mélange (22/24), si les facteurs " L " et " a " restent relativement inchangés par rapport à la mono-injection, le facteur " b " est ici nettement diminué d'environ 1/6°.

Sans que la Demanderesse puisse à aucun moment être liée par l'explication ci-dessous donnée des phénomènes observés, on peut avancer le fait que les résultats observés ici dans le cadre d'une multi-injections sont sans doute liés à une nette diminution du risque d'oxyder localement trop fortement les pigments chromatiques de la chair traitée.

On sait qu'une oxydation mal contrôlée du produit peut donner lieu à un produit d'aspect dégradé (comme " brûlé"), difficilement exploitable d'autant plus que le phénomène est irréversible.

On a par ailleurs effectué des essais de triple injection par les vannes 22, 23 et 24, du mélange de traitement comportant l'ozone, sur des chairs de thon, ou encore de volaille.

Ces essais montrent des résultats spectaculaires en terme de blancheur (coefficients L allant de 64 à 70%) par rapport aux mêmes chairs traitées par le site utilisateur selon son procédé habituel de lavages/essorages multiples, tout en conduisant à un abattement du rouge d'environ 50%, et en laissant le facteur b inchangé voire diminué.

Les chairs de thon ou de volaille, ainsi testées ont par ailleurs été évaluées, après traitement selon l'invention, sur un plan microbiologique. Les résultats obtenus montrent un gain sanitaire très significatif, avec une diminution de la flore totale d'une valeur d'un log, voire jusqu'à 1,6 log. On sait l'importance de cet aspect microbiologique pour l'industrie manipulant de la chair de volaille, dont c'est une préoccupation constante.

Les chairs de volailles ou de poisson ainsi traitées montrent donc un bilan microbiologique tout à fait attractif, et on n'observe néanmoins aucune dénaturation des propriétés fonctionnelles des protéines (par exemple leur pouvoir gélifiant).

Tout comme dans le cas de certains résultats précédemment commentés pour des chairs de poisson, il faut souligner qu'une telle qualité finale de chair de volaille, notamment en terme de facteur " a ", ne pouvait être précédemment obtenue par le site utilisateur considéré sur sa chaîne de traitement traditionnelle, même après un très grand nombre de lavages/essorages.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art. Ainsi, si l'invention a été tout particulièrement exemplifiée dans ses performances et avantages dans le cas de chairs de poissons et de volaille, on comprendra au vue de tous les résultats spectaculaires précédemment décrits qu'elle trouve son application dans beaucoup d'autres domaines de produits alimentaires tels que par exemple les crustacés et autres coquillages, ou encore les viandes de boucherie, ou les pulpes de fruit ou de légumes.

De même, si l'on a décrit dans tout ce qui précède plus particulièrement des contacteurs tubulaires, à une ou plusieurs séries de spires (par exemple de forme circulaire ou encore hélicoïdale), on peut envisager d'autres types de contacteurs, par exemple tels que constitués de un ou plusieurs mélangeurs statiques en série (tels que ceux commercialisés par la société SULZER), le principe clé étant en fait de réaliser grâce à ce dispositif un mélange que l'on peut qualifier d'intime entre le produit à traiter et l'ozone, il permet donc d'une part de réaliser ou d'achever la solubilisation de l'ozone dans l'eau, et d'autre part de réaliser un temps de contact suffisant entre le produit et l'ozone dissous sans que n'intervienne une démixtion, ce temps de contact devant être suffisant pour obtenir le niveau de traitement requis.

On comprend alors qu'un tel dispositif permet de créer sur le flux de solution initiale y transitant une certaine perte de charge, qu'il est possible de contrôler, favorisant l'échange, tout en assurant un régime de circulation dynamique évitant les zones de volumes morts et de vitesse nulle.

## Revendications

1. Procédé de traitement d'un produit alimentaire, comportant une mise en contact du produit avec de l'ozone, le produit ayant été au préalable mélangé pour former une solution initiale qui comporte, outre le produit, de l'eau, **se caractérisant par** la mise en oeuvre combinée des mesures suivantes :
a) On dispose d'une source de ladite solution initiale (14);
b) On dispose d'un organe de pompage (10) qui amène, sous une pression de 0,1 à 10 bars relatifs, la solution initiale à un contacteur (11);
c) On injecte dans la solution initiale un mélange gazeux de traitement qui comporte de l'ozone, l'injection se faisant selon l'une, ou plusieurs à la fois, des localisations suivantes (9, 22/23/24/25) :
- entre ladite source initiale et l'organe de pompage;
- entre l'organe de pompage et le contacteur;
- au niveau d'un ou de plusieurs des points du contacteur;
le contacteur étant apte à réaliser un temps de contact suffisant entre le produit et l'ozone injecté dans la solution, pour permettre ledit traitement, sans qu'intervienne une démixtion liquide-gaz à l'intérieur du contacteur.

2. Procédé selon la revendication 1, **caractérisé en ce que** le produit entrant dans la composition de la solution initiale est une chair de poisson, telle qu'obtenue après une opération de séparation chair/arêtes et/ou chair/têtes.

3. Procédé selon la revendication 1, **caractérisé en ce que** le produit entrant dans la composition de la solution initiale est une chair de poisson, telle qu'obtenue après une opération de broyage de filets.

4. Procédé selon la revendication 1, **caractérisé en ce que** le produit entrant dans la composition de la solution initiale est une chair de viande de boucherie, telle qu'obtenue après une opération de séparation chair/carcasse.

5. Procédé selon la revendication 1, **caractérisé en ce que** le produit entrant dans la composition de la solution initiale est une chair de volaille, telle qu'obtenue après une opération de séparation chair/carcasse.

6. Procédé selon la revendication 1, **caractérisé en ce que** le produit entrant dans la composition de la solution initiale est une chair ou purée de fruit ou légume.

7. Procédé selon l'une quelconque des revendications précédentes, **caractérisé en ce que** le produit entrant dans la composition de la solution initiale a, préalablement audit mélange, subit une ou plusieurs opérations de lavage en milieu aqueux.

8. Procédé selon l'une quelconque des revendications précédentes, **caractérisé en ce que** l'on procède, ultérieurement au traitement, à une étape d'essorage du produit de la solution résultant du traitement, puis à une ou plusieurs opérations de lavage du produit en milieu aqueux.

9. Procédé selon l'une quelconque des revendications précédentes, **caractérisé en ce que** la dose d'ozone utilisée pour le traitement, exprimée en grammes d'ozone par kilogramme de produit, est située dans la gamme allant de 0,2 à 2 grammes d'ozone par kilogramme de produit.

10. Procédé selon la revendication 9, **caractérisé en ce que** la dose est située dans la gamme allant de 0.3 à 1 g/kg.

11. Procédé selon la revendication 9 ou 10, **caractérisé en ce que** la dose est située dans la gamme allant 0,4 à 0,9 g/kg.

12. Procédé selon l'une quelconque des revendications précédentes, **caractérisé en ce que** la teneur en ozone dudit mélange gazeux de traitement est située dans la gamme allant de 10 à 200 g/m³.

13. Procédé selon la revendication 12, **caractérisé en ce que** ladite teneur est située dans la gamme allant de 20 à 120 g/m³.

14. Procédé selon la revendication 12 ou 13, **caractérisé en ce que** ladite teneur est comprise dans la gamme allant de 40 à 100 g/m³.

15. Procédé selon l'une quelconque des revendications précédentes, **caractérisé en ce que** la composition de ladite solution initiale respecte un taux de dilution correspondant à un volume de produit pour 0,5 à 10 volumes d'eau.

16. Procédé selon la revendication 15, **caractérisé en ce que** le taux de dilution correspond à un volume de produit pour 1 à 5 volumes d'eau.

17. Procédé selon la revendication 15 ou 16, **caractérisé en ce que** le taux de dilution correspond à un volume de produit pour 2 à 5 volumes d'eau.

18. Procédé selon l'une des revendications précédentes, **caractérisé en ce que** la pression, sous laquelle la solution initiale qui comporte le produit à traiter est amenée dans le contacteur, est située dans l'intervalle allant de 0,2 à 2 bars relatifs.

19. Procédé selon l'une des revendications précédentes, **caractérisé en ce que** ladite solution initiale comporte un acide organique.

20. Procédé selon l'une des revendications précédentes, **caractérisé en ce que** ladite solution initiale comporte un composé basique.

21. Procédé selon l'une des revendications précédentes, **caractérisé en ce que** ledit contacteur est un mélangeur statique liquide/gaz.

22. Procédé selon l'une des revendications 1 à 20, **caractérisé en ce que** ledit contacteur se présente sous la forme d'un réacteur tubulaire, tel que constitué d'une canalisation adoptant un chemin non rectiligne, muni d'une entrée permettant d'admettre ladite solution initiale en provenance de l'organe de pompage, et d'une sortie, apte à pouvoir être raccordée à un organe de stockage (12) de la solution, ou à un dispositif (20) dans lequel la solution pourra subir une opération postérieure audit traitement.

23. Procédé selon la revendication 22, **caractérisé en ce que** la canalisation adopte, sur tout ou partie de la portion entre l'entrée et la sortie du contacteur, une structure formée par une ou plusieurs spires circulaires ou hélicoïdales (11, 11A, 11B, 11C).

24. Procédé selon l'une des revendications précédentes, **caractérisé en ce que** tout ou partie de la solution initiale obtenue en sortie du contacteur est dirigée vers un organe de stockage (12) de la solution, ou vers un dispositif (20) dans lequel la solution pourra subir une opération postérieure audit traitement.

25. Procédé selon l'une quelconque des revendications précédentes, **caractérisé en ce que** tout ou partie de la solution initiale obtenue en sortie du contacteur est recyclée vers l'entrée de l'organe de pompage afin de permettre un nouveau transit au sein du contacteur et une nouvelle étape dudit traitement à l'ozone.

26. Procédé selon la revendication 25, **caractérisé en ce qu'**avant d'atteindre l'organe de pompage, la solution est provisoirement stockée dans une colonne de dégazage (12).

27. Installation de traitement d'un produit alimentaire, permettant la mise en contact du produit avec de l'ozone, le produit ayant été au préalable mélangé pour former une solution initiale qui comporte outre le produit, de l'eau, comportant:
a) une source (15, 12) de ladite solution initiale;
b) un organe de pompage (10) permettant d'amener sous une pression de 0,1 à 10 bars relatifs la solution initiale à un contacteur;
c) une source (2) d'un mélange gazeux de traitement qui comporte de l'ozone;
d) des moyens (22, 23, 24, 25, 21) d'injection du mélange gazeux de traitement dans la solution initiale, au niveau d'une ou de plusieurs à la fois des localisations suivantes :
- entre ladite source initiale et l'organe de pompage;
- entre l'organe de pompage et le contacteur;
- au niveau d'un ou de plusieurs des points du contacteur.

28. Installation selon la revendication 27, **caractérisée en ce que** ladite source de solution initiale est une solution comportant de la chair de poisson et de l'eau.

29. Installation selon la revendication 27, **caractérisée en ce que** ladite source de solution initiale est une solution comportant de la chair de viande de boucherie et de l'eau.

30. Installation selon la revendication 27, **caractérisée en ce que** ladite source de solution initiale est une solution comportant de la chair de volaille et de l'eau.

31. Installation selon la revendication 27, **caractérisée en ce que** ladite source de solution initiale est une solution comportant de la chair ou purée de fruit ou légume et de l'eau.

32. Installation selon l'une des revendications 27 à 31, **caractérisée en ce que** ledit contacteur est un mélangeur statique liquide-gaz.

33. Installation selon l'une des revendications 27 à 31, **caractérisée en ce que** ledit contacteur se présente sous la forme d'un réacteur tubulaire, tel que constitué d'une canalisation adoptant un chemin non rectiligne, muni d'une entrée permettant d'admettre ladite solution initiale en provenance de l'organe de pompage, et d'une sortie, apte à être raccordée à un organe de stockage de la solution, ou à un dispositif dans lequel la solution pourra subir une opération postérieure au dit traitement.

34. Installation selon la revendication 33, **caractérisée en ce que** la canalisation adopte, sur tout ou partie de la portion située entre l'entrée et la sortie du contacteur, une structure comportant une ou plusieurs spires circulaires ou hélicoïdales (11, 11 A, 11B, 11C).

## Patentansprüche

1. Verfahren zur Behandlung von Lebensmitteln, ermöglichend mit dem Inkontaktbringen des Lebensmittels mit Ozon, wobei das Lebensmittel zuvor gemischt worden ist, um eine Anfangslösung zu bilden, die außer dem Lebensmittel Wasser enthält, welches Verfahren sich durch die kombinierte Ausführung folgender Arbeitsgänge kennzeichnet:
a) Man verfügt über eine Quelle der genannten Anfangslösung (14);
b) Man verfügt über eine Pumpvorrichtung (10), die unter einem Druck von 0,1 bis 10 relativen bar die Anfangslösung zu einer Kontaktvorrichtung (11) bringt;
c) Man spritzt in die Anfangslösung ein behandelndes Gasgemisch ein, das Ozon enthält, wobei das Einspritzen gemäß einem oder mehreren zugleich der folgenden Orte (9, 22/23/24/25) erfolgt:
- zwischen der Anfangsquelle und der Pumpvorrichtung;
- zwischen der Pumpvorrichtung und der Kontaktvorrichtung;
- an einem oder mehreren Punkten der Kontaktvorrichtung;
wobei die Kontaktvorrichtung in der Lage ist, für eine ausreichende Kontaktzeit zwischen dem Lebensmittel und dem in die Lösung eingespritzten Ozon zu sorgen, um die Behandlung zu ermöglichen ohne dass es im Inneren der Kontaktvorrichtung zu einem Entmischen von Flüssigkeit und Gas kommt.

2. Verfahren nach Anspruch 1, **dadurch gekennzeichnet, dass** das Lebensmittel, das in die Zusammensetzung der Anfangslösung eingebracht wird, ein Fischfleisch ist, wie man es nach einem Trennvorgang Fleisch/Gräten und/oder Fleisch/Kopf erhält.

3. Verfahren nach Anspruch 1, **dadurch gekennzeichnet, dass** das Lebensmittel, das in die Zusammensetzung der Anfangslösung eingebracht wird, ein Fischfleisch ist, wie man es nach einem Mahlvorgang der Filets erhält.

4. Verfahren nach Anspruch 1, **dadurch gekennzeichnet, dass** das Lebensmittel, das in die Zusammensetzung der Anfangslösung eingebracht wird, ein Metzgerfleisch ist, wie man es nach einem Trennvorgang Fleisch/Knochen erhält.

5. Verfahren nach Anspruch 1, **dadurch gekennzeichnet, dass** das Lebensmittel, das in die Zusammensetzung der Anfangslösung eingebracht wird, ein Geflügelfleisch ist, wie man es nach einem Trennvorgang Fleisch/Knochen erhält.

6. Verfahren nach Anspruch 1, **dadurch gekennzeichnet, dass** das Lebensmittel, das in die Zusammensetzung der Anfangslösung eingebracht wird, ein Fruchtoder Gemüsefleisch oder -püree ist.

7. Verfahren nach einem der vorhergenden Ansprüche, **dadurch gekennzeichnet, dass** das Lebensmittel, das in die Zusammensetzung der Anfangslösung eingebracht wird, vor dem Mischen einem oder mehreren Waschgängen in einem wässrigen Medium unterzogen wird.

8. Verfahren nach einem der vorhergehenden Ansprüche, **dadurch gekennzeichnet, dass** man nach der Behandlung einen Schleudergang des Lebensmittels der aus der Behandlung resultierenden Lösung und danach einen oder mehrere Waschgänge des Lebensmittels in wässriger Lösung ausführt.

9. Verfahren nach einem der vorhergehenden Ansprüche, **dadurch gekennzeichnet, dass** die zur Behandlung verwendete Ozondosis, ausgedrückt in Gramm Ozon pro Kilogramm Lebensmittel, im Bereich von 0,2 bis 2 Gramm Ozon pro Kilogramm Lebensmittel liegt.

10. Verfahren nach Anspruch 9, **dadurch gekennzeichnet, dass** die Dosis im Bereich von 0,3 bis 1 g/kg liegt.

11. Verfahren nach Anspruch 9 oder 10, **dadurch gekennzeichnet, dass** die Dosis im Bereich von 0,4 bis 0,9 g/kg liegt.

12. Verfahren nach einem der vorhergehenden Ansprüche, **dadurch gekennzeichnet, dass** der Ozongehalt des behandelnden Gasgemischs im Bereich von 10 bis 200 g/m³ liegt.

13. Verfahren nach Anspruch 12, **dadurch gekennzeichnet, dass** der Ozongehalt im Bereich von 20 bis 120 g/m³ liegt.

14. Verfahren nach Anspruch 12 oder 13, **dadurch gekennzeichnet, dass** der Onzongehalt im Bereich von 40 bis 100 g/m³ liegt.

15. Verfahren nach einem der vorhergehenden Ansprüche, **dadurch gekennzeichnet, dass** die Zusammensetzung der Anfangslösung ein Verdünnungsverhältnis einhält, das einem Volumen Lebensmittel auf 0,5 bis 10 Volumen Wasser entspricht.

16. Verfahren nach Anspruch 15, **dadurch gekennzeichnet, dass** das Verdünnungsverhältnis einem Volumen Lebensmittel auf 1 bis 5 Volumen Wasser entspricht.

17. Verfahren nach Anspruch 15 oder 16, **dadurch gekennzeichnet, dass** das Verdünnungsverhältnis einem Volumen Lebensmittel auf 2 bis 5 Volumen Wasser entspricht.

18. Verfahren nach einem der vorhergehenden Ansprüche, **dadurch gekennzeichnet, dass** der Druck, unter dem die Anfangslösung, die das zu behandelnde Lebensmittel enthält, der Kontaktvorrichtung zugeführt wird, im Bereich von 0,2 bis 2 relativen bar liegt.

19. Verfahren nach einem der vorhergehenden Ansprüche, **dadurch gekennzeichnet, dass** die Anfangslösung eine organische Säure enthält.

20. Verfahren nach einem der vorhergehenden Ansprüche, **dadurch gekennzeichnet, dass** die Anfangslösung eine basische Verbindung enthält.

21. Verfahren nach einem der vorhergehenden Ansprüche, **dadurch gekennzeichnet, dass** die Kontaktvorrichtung ein statischer Flüssigkeit/Gas-Mischer ist.

22. Verfahren nach einem der Ansprüche 1 bis 20, **dadurch gekennzeichnet, dass** die Kontaktvorrichtung die Form eines Röhrenreaktors aufweist, wie z.B. bestehend aus einer Rohrleitung mit nicht geradem Verlauf, versehen mit einem Eingang, der die Zuführung der von der Pumpvorrichtung kommenden Anfangslösung ermöglicht, und einem Ausgang, der geeignet ist, an eine Lagervorrichtung (12) für die Lösung oder an eine Vorrichtung (20), in der die Lösung einem Arbeitsgang nach der Behandlung unterzogen werden kann, angeschlossen zu werden.

23. Verfahren nach Anspruch 22, **dadurch gekennzeichnet, dass** die Rohrleitung auf dem ganzen oder einem Teil von dem Abschnitt zwischen dem Eingang und dem Ausgang der Kontaktvorrichtung eine Struktur annimmt, die aus einer oder mehreren ringförmigen oder schrägen Windungen (11, 11A, 11B, 11C) gebildet ist.

24. Verfahren nach einem der vorhergehenden Ansprüche, **dadurch gekennzeichnet, dass** die gesamte oder ein Teil von der Lösung, die man am Ausgang der Kontaktvorrichtung erhält, zu einer Lagervorrichtung (12) für die Lösung oder zu einer Vorrichtung (20), in der die Lösung einem Arbeitsgang nach der Behandlung unterzogen werden kann, geleitet wird.

25. Verfahren nach einem der vorhergehenden Ansprüche, **dadurch gekennzeichnet, dass** die gesamte oder ein Teil von der Lösung, die man am Ausgang der Kontaktvorrichtung erhält, zurück zum Eingang der Pumpvorrichtung geführt wird, um ein erneutes Durchführen durch die Kontaktvorrichtung und einen erneuten Schritt der Behandlung mit Ozon zu ermöglichen.

26. Verfahren nach Anspruch 25, **dadurch gekennzeichnet, dass** vor Erreichen der Pumpvorrichtung die Lösung provisorisch in einer Entgasungskolonne (12) gelagert wird.

27. Anlage zur Behandlung von Lebensmitteln, ermöglichend den Kontakt des Lebensmittels mit Ozon, wobei das Lebensmittel zuvor gemischt worden ist, um eine Anfangslösung zu bilden, die außer dem Lebensmittel Wasser umfasst, umfassend:
a) eine Quelle (15, 12) der Anfangslösung;
b) eine Pumpvorrichtung (10), die unter einem Druck von 0,1 bis 10 relativen bar die Zuführung der Anfangslösung zu einer Kontaktvorrichtung ermöglicht;
c) eine Quelle (2) eines behandelnden Gasgemischs, die Ozon umfasst;
d) Mittel (22, 23, 24, 25, 21) zum Einspritzen des behandelnden Gasgemischs in die Anfangslösung an einem oder mehreren gleichzeitig der folgenden Orte:
- zwischen der Anfangsquelle und der Pumpvorrichtung;
- zwischen der Pumpvorrichtung und der Kontaktvorrichtung;
- an einem oder mehreren Punkten der Kontaktvorrichtung.

28. Anlage nach Anspruch 27, **dadurch gekennzeichnet, dass** die Anfangslösungsquelle eine Lösung ist, die Fischfleisch und Wasser umfasst.

29. Anlage nach Anspruch 27, **dadurch gekennzeichnet, dass** die Anfangslösungsquelle eine Lösung ist, die Metzgerfleisch und Wasser umfasst.

30. Anlage nach Anspruch 27, **dadurch gekennzeichnet, dass** die Anfangslösungsquelle eine Lösung ist, die Geflügelfleisch und Wasser umfasst.

31. Anlage nach Anspruch 27, **dadurch gekennzeichnet, dass** die Anfangslösungsquelle eine Lösung ist, die Frucht- oder Gemüsefleisch oder -püree und Wasser umfasst.

32. Anlage nach einem der Ansprüche 27 bis 31, **dadurch gekennzeichnet, dass** die Kontaktvorrichtung ein statischer Flüssigkeit/Gas-Mischer ist.

33. Anlage nach einem der Ansprüche 27 bis 31, **dadurch gekennzeichnet, dass** die Kontaktvorrichtung die Form eines Röhrenreaktors aufweist, wie z.B. bestehend aus einer Rohrleitung mit nicht geradem Verlauf, versehen mit einem Eingang, der die Zuführung der von der Pumpvorrichtung kommenden Anfangslösung ermöglicht, und einem Ausgang, der geeignet ist, an eine Lagervorrichtung für die Lösung oder an eine Vorrichtung, in der die Lösung einem Arbeitsgang nach der Behandlung unterzogen werden kann, angeschlossen zu werden.

34. Anlage nach Anspruch 33, **dadurch gekennzeichnet, dass** die Rohrleitung auf dem ganzen oder einem Teil von dem Abschnitt zwischen dem Eingang und dem Ausgang der Kontaktvorrichtung eine Struktur aufweist, die aus einer oder mehreren ringförmigen oder schrägen Windungen (11, 11A, 11B, 11C) gebildet ist.

## Claims

1. Process for treating a food product, comprising making the product come into contact with ozone, the product having been premixed in order to form an initial solution which, in addition to the product, contains water, being **characterized by** the combined implementation of the following steps:
a) a supply of said initial solution (14) is used;
b) a pumping device (10) is used which takes the initial solution under a pressure of from 0.1 to 10 bar relative to a contactor (11);
c) an ozone-containing treatment gas mixture is injected into the initial solution, the injection taking place at one or simultaneously at several of the following locations (9, 22/23/24/25):
- between said initial supply and the pumping device;
- between the pumping device and the contactor;
- at one or more points in the contactor;
the contactor being capable of allowing a sufficient time for contact between the product and the ozone injected into the solution in order to allow said treatment, without the occurrence of liquid/gas demixing inside the contactor.

2. Process according to Claim 1, **characterized in that** the product involved in the composition of the initial solution is fish meat, such as that obtained after an operation of separating the meat from the bones and/or the meat from the heads.

3. Process according to Claim 1, **characterized in that** the product involved in the composition of the initial solution is fish meat, such as that obtained after an operation of grinding fillets.

4. Process according to Claim 1, **characterized in that** the product involved in the composition of the initial solution is butcher meat, such as that obtained after an operation of separating the meat from the carcass.

5. Process according to Claim 1, **characterized in that** the product involved in the composition of the initial solution is poultry meat, such as that obtained after an operation of separating the meat from the carcass.

6. Process according to Claim 1, **characterized in that** the product involved in the composition of the initial solution is fruit flesh or vegetable matter or a purée thereof.

7. Process according to any one of the preceding claims, **characterized in that** the product involved in the composition of the initial solution has, prior to said mixing, undergone one or more operations of washing in an aqueous medium.

8. Process according to any one of the preceding claims, **characterized in that**, after the treatment, a step of draining the product from the solution resulting from the treatment is carried out, this being followed by one or more operations of washing the product in an aqueous medium.

9. Process according to any one of the preceding claims, **characterized in that** the dose used for the treatment, expressed in grams of ozone per kilogram of product, lies within the range going from 0.2 to 2 grams of ozone per kilogram of product.

10. Process according to Claim 9, **characterized in that** the dose lies within the range going from 0.3 to 1 g/kg.

11. Process according to Claim 9 or 10, **characterized in that** the dose lies within the range going from 0.4 to 0.9 g/kg.

12. Process according to any one of the preceding claims, **characterized in that** ozone content of said treatment gas mixture lies within the range going from 10 to 200 g/m³.

13. Process according to Claim 12, **characterized in that** said content lies within the range going from 20 to 120 g/m³.

14. Process according to Claim 12 or 13, **characterized in that** said content lies within the range going from 40 to 100 g/m³.

15. Process according to any one of the preceding claims, **characterized in that** the composition of said initial solution satisfies a degree of dilution corresponding to one volume of product per 0.5 to 10 volumes of water.

16. Process according to Claim 15, **characterized in that** the degree of dilution corresponds to one volume of product per 1 to 5 volumes of water.

17. Process according to Claim 15 or 16, **characterized in that** the degree of dilution corresponds to one volume of product per 2 to 5 volumes of water.

18. Process according to one of the preceding claims, **characterized in that** the pressure, under which the initial solution containing the product to be treated is taken into the contactor, lies within the range going from 0.2 to 2 bar relative.

19. Process according to one of the preceding claims, **characterized in that** said initial solution contains an organic acid.

20. Process according to one of the preceding claims, **characterized in that** said initial.solution contains a basic compound.

21. Process according to one of the preceding claims, **characterized in that** said contactor is a liquid/gas static mixer.

22. Process according to one of Claims 1 to 20, **characterized in that** said contactor is in the form of a tube reactor, such as one consisting of a pipe following a non-straight path, provided with an inlet allowing said initial solution coming from the pumping device to enter and with an outlet capable of being able to be connected to a device (12) for storing the solution or to an apparatus (20) in which the solution may undergo an operation after said treatment.

23. Process according to Claim 22, **characterized in that** the pipe has, over all or part of the portion between the inlet and the outlet of the contactor, a structure formed by one or more circular or helical turns (11, 11A, 11B, 11C).

24. Process according to one of the preceding claims, **characterized in that** all or part of the initial solution obtained at the outlet of the contactor is sent to a device (12) for storing the solution or to an apparatus (20) in which the solution may undergo an operation after said treatment.

25. Process according to one of the preceding claims, **characterized in that** all or part of the initial solution obtained at the outlet of the contactor is recycled into the inlet of the pumping device so as to allow a new pass through the contactor and a new step of said ozone treatment.

26. Process according to Claim 25, **characterized in that** the solution, before it reaches the pumping device, is temporarily stored in a degassing column (12).

27. Plant for treating a food product, allowing the product to be brought into contact with the ozone, the product having been premixed in order to form an initial solution which, in addition to the product, contains water, comprising:
a) a supply (15, 12) of said initial solution;
b) a pumping device (10) which allows the initial solution to be taken under a pressure of from 0.1 to 10 bar relative to a contactor;
c) a supply (2) of a treatment gas mixture which contains ozone;
d) means (22, 23, 24, 25, 21) for injecting the treatment gas mixture into the initial solution at one or simultaneously at several of the following locations:
- between said initial supply and the pumping device;
- between the pumping device and the contactor;
- at one or more points in the contactor.

28. Plant according to Claim 27, **characterized in that** said supply of initial solution is a solution containing fish meat and water.

29. Plant according to Claim 27, **characterized in that** said supply of initial solution is a solution containing butcher meat and water.

30. Plant according to Claim 27, **characterized in that** said supply of initial solution is a solution containing poultry meat and water.

31. Plant according to Claim 27, **characterized in that** said supply of initial solution is a solution containing fruit flesh or vegetable matter, or a purée thereof, and water.

32. Plant according to one of Claims 27 to 31, **characterized in that** said contactor is a liquid/gas static mixer.

33. Plant according to one of Claims 27 to 31, **characterized in that** said contactor is in the form of a tube reactor, such as one consisting of a pipe following a nonstraight path, provided with an inlet allowing said initial solution coming from the pumping device to enter and with an outlet capable of being connected to a device for storing the solution or to an apparatus in which the solution may undergo an operation after said treatment.

34. Plant according to Claim 33, **characterized in that** the pipe has, over all or part of the portion lying between the inlet and the outlet of the contactor, a structure comprising one or more circular or helical turns (11, 11A, 11B, 11C).
